# EUROPEAN PATENT APPLICATION

(11) **EP 4 617 107 A1**
(43) Date of publication of application: **17.09.2025**
(21) Application number: 25153861.7
(22) Date of filing: 24.01.2025
(51) Int. Cl.: B60L 53/30, B60L 53/66

(54) **A COMMUNICATIONS INTERFACE, A COMMUNICATIONS SYSTEM AND A VEHICLE**

(30) Priority: 11.03.2024 EP 24162745
(71) Applicant: Volvo Penta Corporation, 405 08 Göteborg (SE)
(72) Inventor: LANNETOFT, Simon, 461 94 Trollhättan (SE); HULTMAN ERICSON, Gabriel, 414 63 Göteborg (SE); BHUMIREDDY, Amaranath Reddy, 426 50 Göteborg (SE)
(74) Representative: Valea AB

(57) **Abstract**

A communications interface (1) communication interface (1) for a charging system (3), said communication interface (1) being electrically connectable to a charging station (3'), said communication interface (1) comprising a charging control circuit (18) configured to assume a charging control circuit input characteristic (V'ₐ) when receiving a charging control circuit input (V'₀), said charging control circuit (18) being configured to communicate with a charging control unit (22) of said charging system (3); an interface circuit (12) configured to assume an interface circuit input characteristic (Vₐ) when connected to said charging station (3'), said interface circuit (12) being galvanically isolated from said charging control circuit (18), and an input circuitry (14) configured to receive at least information indicative of said interface circuit input characteristic (Vₐ) from said interface circuit (12) or said charging control circuit (18) when said interface circuit (12) is connected to said charging station (3'), said input circuitry (14) being configured to control an input on said charging control circuit (18) or said interface circuit (12) resulting in that a ratio between said interface circuit input characteristic (Vₐ) and said charging control circuit input characteristic (V'ₐ) is within a predetermined range, preferably the predetermined range is at least 80% - 120%, more preferred at least 90% - 110%.

## Description

### TECHNICAL FIELD

The disclosure relates generally to systems for charging electric energy storage. In particular aspects, the disclosure relates to a communications interface, a communications system and vehicle, in particular a marine vessel. The disclosure can be applied to vehicles, in particular marine vessels. The disclosure is not restricted to any particular vehicles but is particularly useful for marine vessels provided with a corrosion protection arrangement.

### BACKGROUND

Electric vehicle (EV) charging systems rely on communication systems to ensure safe, efficient, and user-friendly charging operations. These systems facilitate the exchange of critical information between the EV, the charging station, and external networks. Key functionalities include authentication, charging control, energy management.

There are a variety of charging system standards, such as J1772-Type-1, IEC 62196-2 Type-2, Combined charging system (CCS) 1, CCS 2, GB/T AC, GB/T DC, CHAdeMO, NACS and others. These charging systems use different signal interfaces for communication between the charging station and the charging system of the vehicle. These signal interfaces follow different standards depending on the type of charging system. Examples of signal interfaces are control pilot (CP), proximity pilot (PP), CC1, CC2, CAN-H, CAN-L and many more. For example, the CP signal provides bi-directional communication between the electric vehicle and the charging system. As another example, the PP signal is used to detect a cable presence and a current-carrying capacity of the cable. Further, most communication systems use a protective earth (PE) line electrically grounded on the charging station. The PE line is connected to the vehicle when the charging system is connected to the charging station. Hence, also the vehicle is grounded. The PE line is also used as a reference line for the signal interfaces.

Although a charging system, for instance in accordance with any one of the above standards, may be useful for charging an electric vehicle, there is still a need for improving communication systems to be used during a charging procedure.

### SUMMARY

According to a first aspect of the disclosure, there is provided a communication interface for a charging system. The communication interface is electrically connectable to a charging station. The communication interface comprises:
- a charging control circuit configured to assume a charging control circuit input characteristic when receiving a charging control circuit input, the charging control circuit being configured to communicate with a charging control unit of the charging system;
- an interface circuit configured to assume an interface circuit input characteristic when connected to the charging station, the interface circuit being galvanically isolated from the charging control circuit, and
- an input circuitry configured to
   - receive at least information indicative of the interface circuit input characteristic from the interface circuit when the interface circuit is connected to the charging station, the input circuitry being configured to control an input on the charging control circuit resulting in that a ratio between the interface circuit input characteristic and the charging control circuit input characteristic is within a predetermined range, preferably the predetermined range is at least 80% - 120%, more preferred at least 90% - 110%, and/or
   - receive at least information indicative of the charging control circuit input characteristic from the charging control circuit when the interface circuit is connected to the charging station, the input circuitry being configured to control an input on the interface circuit resulting in that a ratio between the interface circuit input characteristic and the charging control circuit input characteristic is within a predetermined range, preferably the predetermined range is at least 80% - 120%, more preferred at least 90% - 110%.

The first aspect of the disclosure may seek to provide a charging system with communications signals that fulfil the requirements to allow charging of a propulsion electric energy storage system to be carried out. This is done by ensuring that the charging control circuit of the communications system of the charging system is galvanically isolated from the charging station. Thereby, the control signals from the charging station are received by the interface circuit and the charging control circuit. However, the control signals received by the control circuit are galvanically isolated from the charging station. The return signals are only received by the charging station from the interface circuit. Accordingly, the control signals will have a ground return path and the ground reference control signal (protected earth (PE)) will be equal to a ground reference of the charging control unit of the charging system. In other words, there is a first loop of electric current from the charging station to the interface circuit and back to the charging station. A second loop is between the input circuitry and the charging control circuit (which may be comprised in a charging control unit). Hence, the charging system may be protected from corrosion due to stray currents while communication is still functioning. By way of example of the first aspect of the disclosure, there is provided a communication interface for a charging system for a marine vessel.

Purely by way of example, a vehicle, provided with a corrosion protection arrangement, which arrangement would normally interrupt control signals and cause the control circuit to fail to provide the response required to e.g. allow charging to start, may, if furnished with a communication interface for a charging system of the present disclosure be provided with an interface circuit which translates the interrupted response of the control circuit into an allowable/recognizable response by the interface circuit.

Optionally, the charging control circuit comprises a set of charging control circuit portions comprising at least a first charging control circuit portion, each charging control circuit portion in the set of charging control circuit portions being adapted to assume an individual charging control circuit portion characteristic being different from the charging control circuit input characteristic when receiving the charging control circuit input. Thereby, the charging control circuit may assume characteristics dependent on a state of the charging system, which can be communicated to the charging control unit.

Optionally, the interface circuit comprises a set of interface circuit portions comprising at least a first interface circuit portion, each interface circuit portion in the set of interface circuit portions being adapted to assume an individual interface circuit portion characteristic being different from the interface circuit input characteristic when connected to the charging station. The charging control circuit and the interface circuit are such that when the interface circuit input characteristic equals the charging control circuit input characteristic, a ratio between a measure of the interface circuit portion characteristic of the first interface circuit portion and a measure of the charging control circuit portion characteristic of the first charging control circuit portion is within a predetermined characteristic measure range, preferably the predetermined characteristic measure range being at least 80% - 120%, more preferred at least 90% - 110%. Thereby, it is made sure that the circuit portion characteristics are the same as when the charging control circuit is directly connected to the charging station.

Optionally, the charging control unit (22) is adapted to receive the individual charging control circuit portion characteristic. Thereby, efficient control of the charging operation may be provided.

Optionally, the charging system has a communication system according to any one or more of the following communication system standards: J1772-Type-1, IEC 62196-2 Type-2, Combined charging system (CCS) 1, CCS 2, GB/T AC, GB/T DC, CHAdeMO, NACS. Hence, a versatile communication interface is provided.

Optionally, a hardware configuration of the charging control circuit is functionally equivalent to a hardware configuration of the interface circuit. Thereby it is made sure that the characteristics of the interface circuit are the same as the characteristics of the charging control circuit when they are exposed to the same inputs under the same circumstances.

Optionally, the charging control circuit comprises a control pilot specific charging control circuit and the interface circuit comprises a control pilot specific interface circuit, wherein a hardware configuration of the control pilot specific control circuit is functionally equivalent to a hardware configuration of the pilot specific interface circuit.

Optionally, the charging control circuit comprises a proximity pilot specific charging control circuit and the interface circuit comprises a proximity pilot specific interface circuit, wherein a hardware configuration of the proximity pilot specific control circuit is functionally equivalent to a hardware configuration of the proximity pilot specific interface circuit.

Optionally, the interface circuit input characteristic is an interface circuit input voltage resulting from a connection of the interface circuit to an input voltage provided by the charging station, and the charging control circuit input characteristic is a charging control circuit input voltage applied on the charging control circuit by the input circuitry.

Optionally, the charging control circuit portion characteristic is an individual charging control circuit portion voltage and the interface control circuit characteristic is an interface control circuit voltage.

According to a second aspect of the disclosure, there is provided a communication system for a charging system for charging a propulsion electric energy storage of a vehicle, the communication system comprising:
- a connector for connection to a charging station,
- the communication interface according to the first aspect,
- a charging control unit, and
- an electric energy storage.

Technical effects and advantages of features of the first aspect of the disclosure apply mutatis mutandis to corresponding features of the second aspect of the disclosure.

According to a third aspect of the disclosure, there is provided a charging system for charging a propulsion electric storage, the charging system comprising the communication system according to the second aspect.

Technical effects and advantages of features of the first and second aspects of the disclosure apply mutatis mutandis to corresponding features of the third aspect of the disclosure.

According to a fourth aspect of the disclosure, there is provided a vehicle comprising
- the charging system according to the third aspect,
- a propulsion electric energy storage connected to the charging system,
- a corrosion protection arrangement,
wherein the corrosion protection arrangement is configured to be galvanically isolate the charging system from a charging station when the communications interface is communicatively connected to the charging station.

Technical effects and advantages of features of the first, second and third aspects of the disclosure apply mutatis mutandis to corresponding features of the fourth aspect of the disclosure.

Optionally, the vehicle comprises a chassis and the charging control circuit is electrically connected to the chassis. Thereby, efficient protection of e.g. the charging system may be provided.

Optionally, the vehicle is a marine vessel.

According to a fifth aspect of the disclosure, there is provided an assembly comprising a vehicle according to the fourth aspect of the present disclosure and a charging station, preferably the charging station is an on-shore charging station connected to an on-shore protective earth.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**Fig. 1** shows a vehicle in the form of a marine vessel according to an example.
**Fig. 2** shows a communications interface according to an example.
**Fig. 3** shows a communication system according to an example.
**Fig. 4** shows a signal interface example.
**Fig. 5** shows a signal interface according to an example.
**Fig. 6** shows a signal interface example.
**Fig. 7** shows a signal interface according to an example.
**Fig. 8** is a combined charging system connected to a marine vessel lacking a corrosion protection arrangement.
**Fig. 9a** is a combined charging system connected to a marine vessel having a first type of corrosion protection arrangement.
**Fig. 9b** is an alternative coupling of the corrosion protection arrangement of Fig. **9a****.**
**Fig. 10** is a combined charging system connected to a marine vessel having a second type of corrosion protection arrangement.
**Fig. 11** is a communications interface in the marine vessel of **Fig. 5a-5b.**
**Fig. 12** is a communications interface in the marine vessel of **Fig. 6****.**

### DETAILED DESCRIPTION

The detailed description set forth below provides information and examples of the disclosed technology with sufficient detail to enable those skilled in the art to practice the disclosure.

In marine applications, problems arise when vehicles, such as marine vessels are connected to an on-shore charging station. A hull of a marine vessel is often metallic and is electrically grounded to water surrounding the vessel. When the vessel is electrically connected to the onshore charging station, a potential difference is generated between the different metals of the hull and the electric lines of the charging station. The water acts as an electrolyte, generating an electric stray current which in turn causes corrosion to the marine vessel. Marine vessels are therefore conventionally equipped with different kinds of corrosion protection arrangements to prevent stray currents that lead to corrosion. The connection between ground of the charging station and the grounded hull of the marine vessel may be provided with a galvanic isolator or an isolation transformer. Alternatively, a ground connection of a low voltage DC electric energy storage system, such as a 24V battery, used for powering low voltage consumers such as control units (ECU) of the marine vessel, is separated from the grounded hull.

It should be noted that a similar problem may arise in a charging system not necessarily being used for charging a marine vessel. On the contrary, a similar problem may be present when charging another type of vehicle such as a truck (not shown) or a car (not shown). Moreover, a problem such as the one presented above may also occur for a charging system for charging an electric energy storage not necessarily connected to a vehicle. As such, although the below presentation uses a marine vessel as an example, it should be noted that the present disclosure is equally applicable to other systems comprising an electric energy storage that needs to be charged. In particular, it should be noted that the present disclosure is equally applicable to any type of vehicle.

There is a striving to introduce charging systems according existing charging standards, such as J1772-Type-1, IEC 62196-2 Type-2, Combined charging system (CCS) 1, CCS 2, GB/T AC, GB/T DC, CHAdeMO, NACS, or any other charging system for charging in e.g. marine applications. However, when connecting a marine vessel with a communication system, the conventional corrosion protection arrangements mentioned hereinabove will prevent the charging process from starting because the PE signal of the on-shore charging station will differ from the ground signal received from the marine vessel, or because the signal interfaces lack a ground return path due to the corrosion protection arrangement.

An aim of the present disclosure is to provide a communications interface, a communications system and a charging system comprising the communications system and the communications interface, which enable marine vessels comprising conventional corrosion protection arrangements to use communication standards for charging of the vessel's propulsion electric or hybrid electric energy storage systems without modifying any existing corrosion protection arrangement of the vessel. The object is at least partly achieved by ensuring that a charging control circuit 18 of the vehicle 4 is galvanically isolated from a charging station 3'. Purely by way of example, the object may be at least partly achieved by galvanically isolating a charging control circuit 18 of the vehicle 4 from a charging station 3'. The charging control circuit 18, which may be comprised in a charging control unit 22 of the vehicle 4, may comprise charging control circuits configured to assume different states or characteristics in dependence of a connection status, a readiness of the vehicle to receive energy, a state or a property of the connected cable and many more. As such, the charging control circuit 18 may be configured to communicate the different states or characteristics as a response to an input signal originating from the charging station 3' or the vehicle. The states or characteristics can be read by or transmitted to the charging station 3' and/or the charging control unit 22 of the vehicle. The charging control circuit 18 may follow a standard depending on the type of charging system.

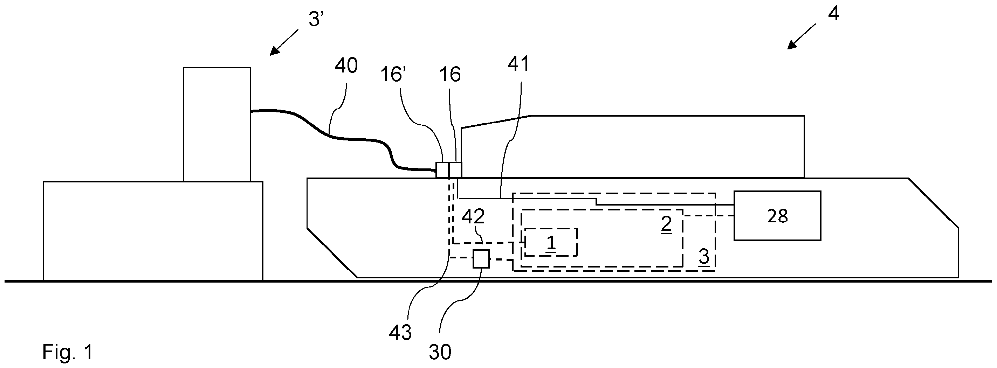

**Fig. 1** shows a vehicle 4 in the form of a marine vessel. The vehicle 4 may comprise a charging system 3 for charging a propulsion electric energy storage 28 which is intended to be used for propelling the vehicle 4 during use. The charging system 3 may comprise a communication system for communication between the charging system 3 and a charging station 3'. The charging station 3' may be electrically connected to the vehicle 4 with a cable 40. The cable may comprise a cable connector 16' which is connectable to a connector 16 of the charging system 3. The cable 40 may comprise power lines for providing energy to the propulsion electric energy storage 28, communication lines and a protective earth (PE) line. Correspondingly, also the vehicle 4 may comprise power lines 41 connecting the connector 16 to the propulsion energy storage 28 and communication lines 42 connecting the connector 16 to the communication system 2 of the charging system 3. Further the vehicle 4 may comprise a PE line 43 connecting the charging system 3 to the protective earth line of the charging station 3'. Further, in the protective earth line 43, there may be arranged a galvanic isolator 30. Alternatively, there may not be a galvanic isolator 30 but instead the galvanic isolation is achieved by separating the low voltage system of the vehicle 4 from the PE line, i.e. the hull or the chassis of the vehicle is not connected to PE of the charging station 3'. The communication system 2 may comprise the communication interface 1 further explained in the following.

As mentioned before, when using a galvanic isolator 30 in the PE line or by separating PE from the hull/chassis, the charging station 3' will prevent the charging process from starting because the PE signal of the charging station will differ from the ground signal received from the marine vessel, or because the signal interfaces lack a ground return path due to a corrosion protection arrangement (not shown). The present disclosure is based on the insight that this problem may be solved by separating the ground of the charging station 3 from the hull/chassis of the vehicle and at the same time providing an "expected" signal to the charging station 3' and/or the charging control unit 22 of the vehicle.

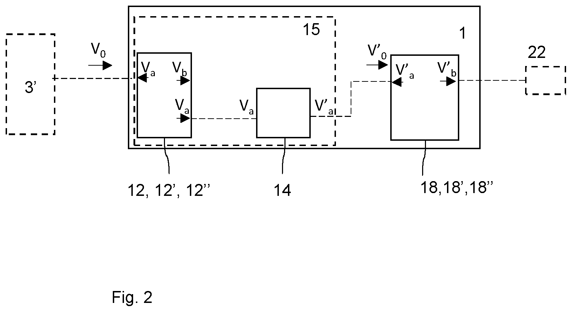

A schematical illustration of a communication interface 1 according to an example of the present disclosure is shown in Fig. 2. The communication interface 1 is connectable to the charging station 3' on the one side and to a charging control unit 22 on the other side. The communication interface 1 may comprise the charging control circuit 18. The charging control circuit 18 may be a charging control circuit according to a charging system standard. As non-limiting examples, the charging control circuit 18 may be a CP-specific charging control circuit 18' or a PP-specific charging control circuit 18''. **In** other standards, the charging control circuit 18 may deviate from these examples. However, common for all standards is that the charging control circuit 18 is configured to assume a charging control circuit input characteristic V'ₐ when receiving a charging control circuit input V'₀. In some examples, the charging control circuit input V'₀ may be the charging control circuit input characteristic V'ₐ. The charging control circuit 18 may further be configured to communicate with a charging control unit 22 of the charging system 3. In some examples, the charging control circuit 18 may further comprise a set of charging control circuit portions comprising at least a first charging control circuit portion, each charging control circuit portion in said set of charging control circuit portions being adapted to assume an individual charging control circuit portion characteristic V'_{b} being different from the charging control circuit input characteristic V'ₐ when receiving the charging control circuit input V'₀.

Further, the communication interface 1 may comprise an interface circuit 12 which may be connectable to the charging station 3'. The interface circuit 12 may be configured to assume an interface circuit input characteristic Vₐ when connected to said charging station 3'. For providing the "expected" response to the charging station 3', the interface circuit is configured to assume essentially the same characteristics Vₐ and V_{b} as the charging control circuit would assume when it would be connected to the charging station 3' under the same circumstances. In other words, the interface circuit 12 may be functionally equivalent to the charging control circuit 18. For example, the interface circuit 12 and the charging control circuit 18 may have the same hardware configuration, such as resistances, switches, diodes, or capacities of equivalent values arranged in the same manner. The interface circuit 12 is galvanically isolated from the charging control circuit 18 and thus from the hull/chassis of the vehicle 4. The galvanic isolation may be achieved by the input circuitry 14. In some examples, the charging station 3' may be configured to apply an input characteristic V₀ which may trigger the interface circuit 12 to assume the interface circuit input characteristic Vₐ. In other examples, interface circuit input characteristic Vₐ is received at the charging station from the input circuitry 14, as explained below. Advantageously, the interface circuit 12 and the input circuitry 14 may be comprised in a component 15. The component 15 can then be added to an existing charging system, by placing it electrically between the charging station 3' and charging system 3.

In some examples, the input circuitry 14 may be arranged to receive an information about the interface circuit interface characteristic Vₐ of the interface circuit 12 and to control an input on the charging control circuit 18, such that the charging control circuit input characteristic Vₐ' is essentially equal to the interface circuit input characteristic Vₐ, for example such that a ratio between said interface circuit input characteristic Vₐ and said charging control circuit input characteristic V'ₐ is within a predetermined range, preferably the predetermined range is at least 80% - 120%, more preferred at least 90% - 110%. Alternatively or additionally, the input circuitry 14 may be arranged to receive an information about the charging control circuit interface characteristic V'ₐ of the charging control circuit 18 and to control an input on the interface circuit 12, such that the charging control circuit input characteristic Vₐ' is essentially equal to the interface circuit input characteristic Vₐ, for example such that a ratio between said interface circuit input characteristic Vₐ and said charging control circuit input characteristic V'ₐ is within a predetermined range, preferably the predetermined range is at least 80% - 120%, more preferred at least 90% - 110%. The input circuitry 14 may e.g. measure the interface circuit input characteristic Vₐ and transfer the measured information, for instance wirelessly or optically, to a power source within the input circuitry 14 which is configured to regenerate the measured interface circuit input characteristic Vₐ, thereby generating an input the charging control circuit input characteristic V'ₐ. Hence, the charging control circuit 18 is provided with a charging control circuit input characteristic V'ₐ which it would have when it was directly connected to the charging station 3'. At the same time, due to the galvanically isolated transfer of information from the interface circuit 12 to the charging control circuit 18, or vice versa, there is no path for stray currents between the PE of the charging station 3' and the hull/chassis of the vehicle 4. The communication interface 1 according to the present disclosure may also have the advantage that a present charging control circuit 18 as part of a standardized charging system 3 does not have to be changed. The input circuitry may achieve the functions of galvanically isolating the charging control circuit 18 from the interface circuit 12, and thereby the vehicle from the charging station 3' in different ways. In some examples, the input circuitry may comprise one or more opto-couplers or transformers. Further, the input circuitry may comprise means to detect the charging control input characteristic V'ₐ and or the interface circuit input characteristic Vₐ and means to control the corresponding characteristic one the other side, such as a voltage source controlled to a voltage corresponding to a detected voltage.

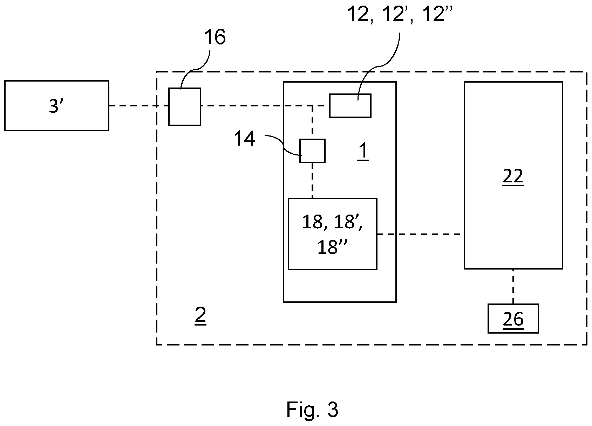

**Fig. 3** shows a schematical illustration of a communication system 2 according to examples of the present disclosure. The communication system 2 may be configured to be connected to the charging station 3' through the connector 16 to communication lines of the charging station 3'. The communication system 2 may comprise the communication interface 1 according to the first aspect of the disclosure, a charging control unit 22 and a electric energy storage 26. The charging control circuit 18 may as mentioned above be a standardized charging control circuit according to the used charging system type. Hence all components except of the input circuitry 14 and the interface circuit 12 may already be present in an existing communication system 2. Hence, the effect of the present disclosure may be achieved by the addition of the input circuitry 14 and the interface circuit 12 to an existing system following a charging system standard. Thus, the charging control circuit 18 according to the used standard may remain unchanged.

The present disclosure is now further exemplified using two non-limiting examples of signal interfaces, i.e. the control pilot signal (CP) interface and the proximity pilot (PP) interface according to the international standard IEC 61851-1 of the International Electrotechnical Commission.

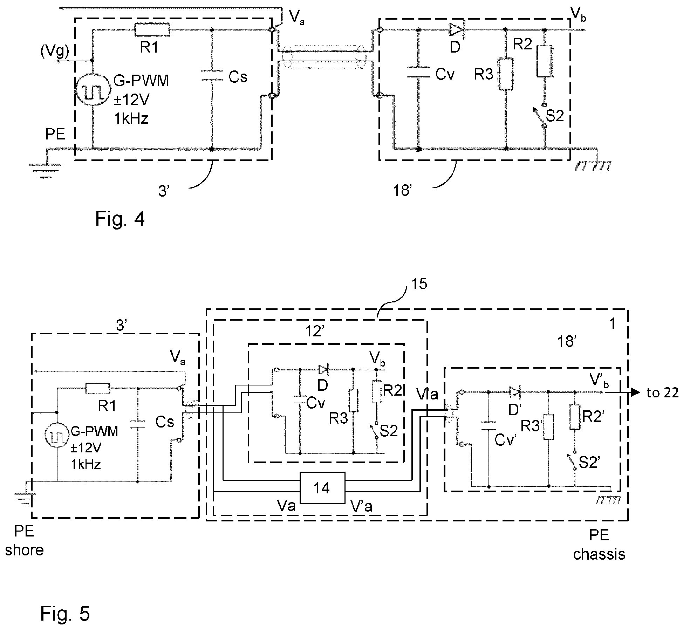

**Fig. 4** shows a CP-interface being devoid of e.g. the input circuitry of the present disclosure. The charging station 3' comprises a circuitry for generating an input signal in the form of a pulse signal (G-PWM). Further, the CP-specific charging control circuit 18' is shown, which is part of the communication system of the vehicle. The charging station 3' is connected to a PE line, the charging control unit 18' is connected to the hull/chassis of the vehicle 4. Upon connection to the charging station 3', the CP-specific charging control circuit 18' is configured to assume a charging control circuit characteristic Vₐ in the form of a voltage vₐ which is measured by the charging station 3'. Further, the CP-specific charging control circuit 18' assumes a charging control circuit portion characteristic V_{b} in the form of a voltage v_{b}, which is communicated to the charging control unit 22. The charging control circuit characteristic Vₐ and the charging control circuit portion characteristic V_{b} may be dependent on states of the charging systems which are indicated by the position of the switch S2.

**Fig. 5** shows a CP-signal interface according to the present disclosure. The communication interface 1 comprises the CP-specific charging control circuit 18'. Further, in between the charging control circuit 18' and the charging station 3', there has been added a CP-specific interface circuit 12' which is configured to assume an interface circuit input characteristic Vₐ, which is essentially equivalent to the charging control circuit input characteristic Vₐ which the charging control circuit would have assumed if it was directly connected to the charging station 3'. This is achieved by using the same hardware configuration of resistances R2, R3, diode D, capacitance Cv and switch S2 as in the CP-specific charging control circuit 18'. Further, the interface circuit input characteristic Vₐ is received by the input circuitry 14 and the input circuitry 14 is configured to apply an input on the CP-specific charging control circuit 18' such that a charging control circuit input characteristic V'ₐ is essentially equivalent to the interface circuit input characteristic Vₐ. Hence, the charging control circuit 18'also produces essentially the same charging control circuit portion characteristic V_{b}. As mentioned above, the input circuitry 14 also galvanically isolates the interface circuit 12 from the charging control circuit 18'. Hence, the charging station 3' is provided with the expected Vₐ and the control unit 22 is provided with the correct V_{b} as if the charging control circuit 18 was directly connected to the charging station 3'.

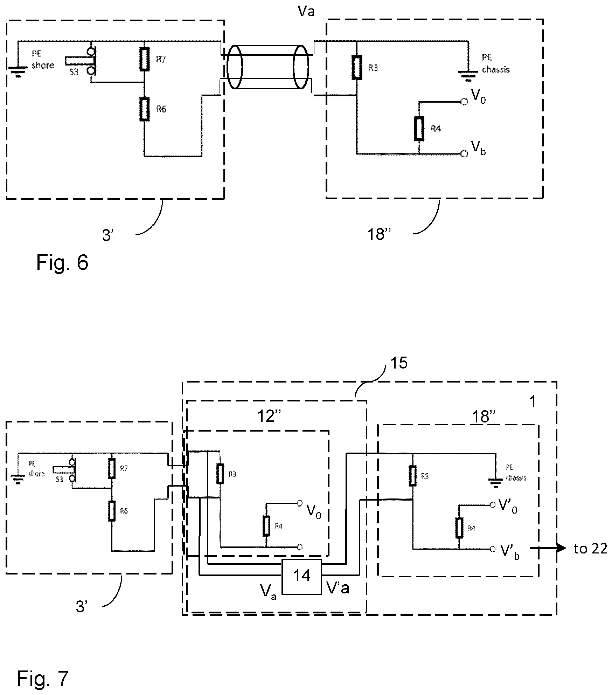

**Fig. 6** shows a corresponding illustration of the PP-signal interface being devoid of e.g. the input circuitry of the present disclosure. Here, an input characteristic V₀ in the form of a voltage v₀ is applied at the PP-specific charging control circuit 18''. The PP-specific charging control circuit 18'' is configured to assume a charging circuit input characteristic Vₐ in the form of a voltage vₐ and a charging circuit portion characteristic V_{b} in the form of a voltage v_{b}. vₐ and v_{b} are also dependent on the circuit portion comprised in the charging station 3'. V_{b} may be communicated to the charging control unit 22. Vₐ may be communicated to the charging station 3'.

**Fig. 7** shows an example of how the PP-signal interface is modified according to the present disclosure. Analogous to the previously discussed cases, a PP-specific interface circuit 12'' is added to the communication interface 1 giving the charging station 3' the same information vₐ as the PP-specific control circuit interface 18'' would if it was directly connected to the charging station 3'. Further, the input circuitry 14 galvanically isolates the PP-specific interface circuit 12'' from the PP-specific control circuit interface 18'' and, at the same time, detects the charging circuit characteristic V'ₐ and controls the interface circuit characteristic Vₐ to be approximately equal to the charging circuit characteristic V'ₐ. Hence, the chassis/hull of the vehicle is galvanically isolated from the protective earth o the charging station 3' while still the charging control circuit characteristic and V'ₐ is the same as it would be without the components 12 and 14, i.e. as according to the prior art shown in Fig.6.

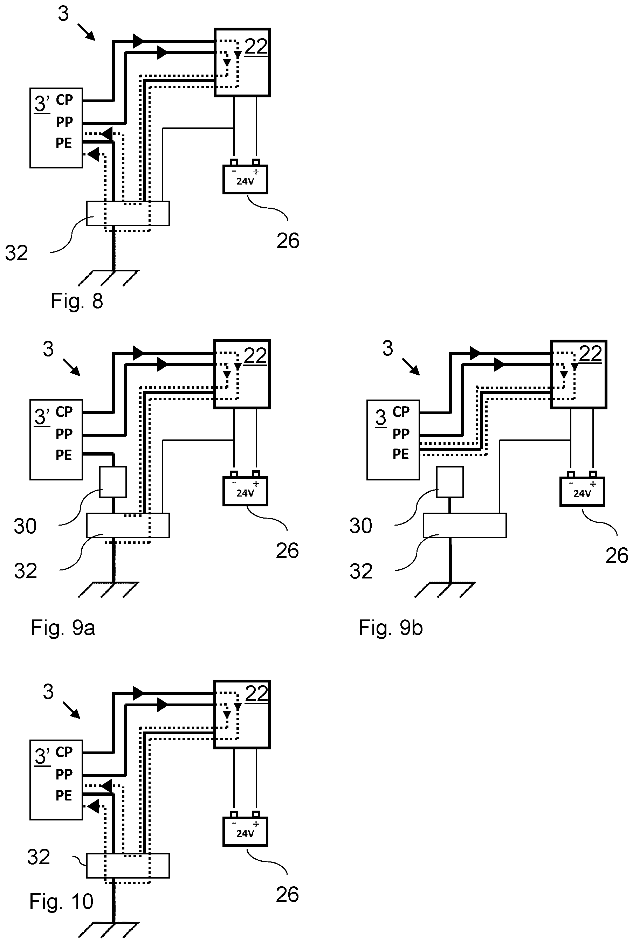

The inventive concept of the present disclosure is further illustrated with reference to Figs. 8-12, showing examples of communication systems using the CP and PP signal interfaces. The person skilled in the art realizes that the concept is equally applicable to other signal interfaces according to various charging system standards. The charging control unit 22 may be configured to monitor and control a process for charging the propulsion electric energy storage system 28. The charging control unit 22 may thus monitor connections of hardware, signals, state of charge of the propulsion electric energy storage system, etc. To communicate with the charging station 3', the charging control unit 22 may be configured to control components of the charging control circuit 18, 18', 18'', such as electric switches S2, S2' of the CP-specific circuit, to indicating a change of status of the charging process by changing a status of the charging control circuit 18, 18', 18''. In the present disclosure, a change of status implemented by the charging control unit 22 in the charging control circuit 18, 18', 18'' is also implemented in the interface circuit 1 by the charging control unit 12, 12', 12''. Thereby, the charging station 3', monitoring the charging process of the charging station 3, would detect a status change in the interface circuit 12, 12', 12'' coupled in parallel with the charging control circuit18, 18', 18". The status change in the interface circuit 12, 12', 12'' would be unaffected by any corrosion protection arrangements 30 and would provide the correct control signals to allow the charging process to be carried out. The charging control unit 22 may be connected to, and electrically powered to the electric energy storage 26.

**Fig. 8** shows a charging station 3' connected to a charging station of a vehicle which lacks a corrosion protection arrangement 30. The control signals, e.g. PP, CP, are provided to control circuits (not shown) which may be comprised in the charging control unit 22. A response of the control signals is returned to the charging station 3' via a bus bar 32 connected to the vehicle's hull or chassis, thereby providing a ground reference. Ground of the electric energy storage 26 is also connected to the bus bar 32. Thereby, the communication signals are returned correctly to the charging station 3' and PE is equal to the ground (GND) of the electric energy storage system. Consequently, the requirements of charging system are fulfilled and charging of the propulsion electric energy storage 28 could be carried out. However, the illustrated system would lead to stray currents between the hull/chassis and the charging station 3', which would lead to corrosion. Therefore, corrosion protection arrangements 30, as shown in Figs. 9-10 are generally applied to vehicles used in water, such as marine vessels.

**Figs. 9a** and **9b** show a vehicle applying a corrosion protection arrangement 30 in the form of a galvanic isolator or an isolation transformer between the grounded hull and the charging station 3' to block stray currents causing corrosion. In the case of Fig. 9a, the corrosion protection arrangement 30 blocks the return path of the PP and CP control signals such that charging cannot take place. In the case of Fig. 9b, the PP and CP control signal lines bypass the corrosion protection arrangement 30. However, ground (GND) of the DC electric energy storage system 26, i.e. ground of the charging control unit 22, will not be equal to the protected earth PE control signal, because ground (GND) cannot bypass the corrosion protection arrangement 30 without generating stray currents and corrosion.

**Fig. 10** shows a corrosion protection arrangement, where the ground (GND) of the DC electric energy storage system 26 is separated from the hull of the vessel. Also in this case, charging via a charging system 3' would encounter problems because ground (GND) of the DC electric energy storage system 26, i.e. ground of the charging control unit 22, will not be equal to the protected earth PE control signal.

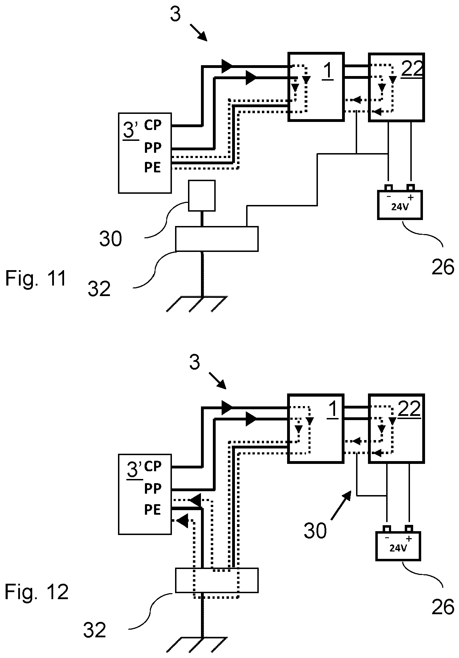

**Fig. 11** and **Fig. 12** conceptually illustrate how the interface circuit 1 of the present disclosure is applied to the marine vessels of **Fig. 9a, Fig. 9b** and **Fig. 10****,** i.e. to marine vessels having corrosion protection arrangements 30. As shown, the interface circuit 1 returns the PP, CP control signals as "expected" by the charging station 3'. This is achieved by galvanically isolating the control circuit 18, 18', 18'' of the charging control unit 22. Thereby, the charging control unit may control the interface circuit 12, 12', 12'' to provide the correct return signals, depending on the status of the on-board system.

In the following, possible features and feature combinations of the present disclosure are presented as a list of numbered Examples.

Example 1: A communication interface (1) for a charging system (3), said communication interface (1) being electrically connectable to a charging station (3'), said communication interface (1) comprising:
- a charging control circuit (18) configured to assume a charging control circuit input characteristic (V'ₐ) when receiving a charging control circuit input (V'₀), said charging control circuit (18) being configured to communicate with a charging control unit (22) of said charging system (3);
- an interface circuit (12) configured to assume an interface circuit input characteristic (Vₐ) when connected to said charging station (3'), said interface circuit (12) being galvanically isolated from said charging control circuit (18), and
- an input circuitry (14) configured to
   ▪ receive at least information indicative of said interface circuit input characteristic (Vₐ) from said interface circuit (12) when said interface circuit (12) is connected to said charging station (3'), said input circuitry (14) being configured to control an input on said charging control circuit (18) resulting in that a ratio between said interface circuit input characteristic (Vₐ) and said charging control circuit input characteristic (V'ₐ) is within a predetermined range, preferably the predetermined range is at least 80% - 120%, more preferred at least 90% - 110%, and/or
   ▪ receive at least information indicative of said charging control circuit input characteristic (V'ₐ) from said charging control circuit (18) when said interface circuit (12) is connected to said charging station (3'), said input circuitry (14) being configured to control an input on said interface circuit (12) resulting in that a ratio between said interface circuit input characteristic (Vₐ) and said charging control circuit input characteristic (V'ₐ) is within a predetermined range, preferably the predetermined range is at least 80% - 120%, more preferred at least 90% - 110%.

Example 2: The communication interface of any one of the preceding examples, wherein said charging control circuit (18) comprises a set of charging control circuit portions comprising at least a first charging control circuit portion, each charging control circuit portion in said set of charging control circuit portions being adapted to assume an individual charging control circuit portion characteristic (V'_{b}) being different from said charging control circuit input characteristic (V'ₐ) when receiving said charging control circuit input (V₀).

Example 3: The communication interface of any one of the preceding examples, wherein said interface circuit (12) comprises a set of interface circuit portions comprising at least a first interface circuit portion, each interface circuit portion in said set of interface circuit portions being adapted to assume an individual interface circuit portion characteristic (V_{b}) being different from said interface circuit input characteristic (Vₐ) when connected to said charging station (3');
- said charging control circuit (18) and said interface circuit (12) being such that when said interface circuit input characteristic (Vₐ) equals said charging control circuit input characteristic (V'ₐ), a ratio between a measure of said interface circuit portion characteristic (V_{b}) of said first interface circuit portion and a measure of said charging control circuit portion characteristic (V'_{b}) of said first charging control circuit portion is within a predetermined characteristic measure range, preferably the predetermined characteristic measure range being at least 80% - 120%, more preferred at least 90% - 110%.

Example 4: The communication interface of examples 2 or 3, wherein the charging control unit (22) is adapted to receive the individual charging control circuit portion characteristic (V'_{b}).

Example 5: The communication interface of any one of the preceding examples, wherein the charging system (3) has a communication system according to any one or more of the following communication system standards: Combined charging System 1 (CCS1), Combined charging System 2 (CCS2), Type-1 (J1772), GB/T AC, GB/T DC, CHAdeMO, Tesla (NACS).

Example 6: The communication interface of any one of the preceding examples, wherein a hardware configuration of said charging control circuit (18) is functionally equivalent to a hardware configuration of said interface circuit (12).

Example 7: The communication interface of any one of the preceding examples, wherein the charging control circuit (18) comprises a control pilot (CP) specific charging control circuit (18') and the interface circuit (12) comprises a control pilot (CP) specific interface circuit (12'), wherein a hardware configuration of the control pilot specific control circuit (12') is functionally equivalent to a hardware configuration of the pilot specific interface circuit (18').

Example 8: The communication interface of any one of the preceding examples, wherein the charging control circuit (18) comprises a proximity pilot (PP) specific charging control circuit (18") and the interface circuit (12) comprises a proximity pilot (PP) specific interface circuit (12''), wherein a hardware configuration of the proximity pilot specific control circuit (12") is functionally equivalent to a hardware configuration of the proximity pilot specific interface circuit (18").

Example 9: The communication interface of any one of the preceding examples, wherein the interface circuit input characteristic (Vₐ) is an interface circuit input voltage (vₐ) resulting from a connection of the interface circuit (12) to an input voltage (v₀) provided by the charging station (3'), and
- the charging control circuit input characteristic (V'ₐ) is a charging control circuit input voltage (v'ₐ) applied on said charging control circuit (18) by said input circuitry (14).

Example 10: The communication interface of any one of the preceding examples, when dependent on any one of examples 2-4, wherein the charging control circuit portion characteristic (V'_{b}) is an individual charging control circuit portion voltage (v'_{b}) and the interface control circuit characteristic (V_{b}) is an interface control circuit voltage (v_{b}).

Example 11: A communication system (2) for a charging system (3) for charging a propulsion electric energy storage (28) of a vehicle (4), the communication system (2) comprising:
- a connector (16) for connection to a charging station (3'),
- the communication interface (1) of any one of examples 1-10,
- a charging control unit (22), and
- an electric energy storage (26).

Example 12: A charging system (3) for charging a propulsion electric storage (28), the charging system (3) comprising the communication system (2) of example 11.

Example 13: A vehicle comprising
- the charging system (3) of example 12,
- a propulsion electric energy storage (28) connected to the charging system (3),
- a corrosion protection arrangement (30),
wherein the corrosion protection arrangement (30) is configured to be galvanically isolate the charging system (3) from a charging station (3') when the communications interface (1) is communicatively connected to the charging station (3').

Example 14: The vehicle of example 13, wherein the vehicle comprises a chassis and the charging control circuit (18) is electrically connected to the chassis.

Example 15: The vehicle of example 13 or 14, wherein the vehicle is a marine vessel (4).

Example 16: An assembly comprising a vehicle according to any one of examples 13 - 15 and a charging station (3'), preferably the charging station (3') is an on-shore charging station connected to an on-shore protective earth (PE).

The terminology used herein is for the purpose of describing particular aspects only and is not intended to be limiting of the disclosure. As used herein, the singular forms "a", "an" and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A communication interface (1) for a charging system (3), said communication interface (1) being electrically connectable to a charging station (3'),
said communication interface (1) comprising:
- a charging control circuit (18) configured to assume a charging control circuit input characteristic (V'ₐ) when receiving a charging control circuit input (V'₀), said charging control circuit (18) being configured to communicate with a charging control unit (22) of said charging system (3);
- an interface circuit (12) configured to assume an interface circuit input characteristic (Vₐ) when connected to said charging station (3'), said interface circuit (12) being galvanically isolated from said charging control circuit (18), and
- an input circuitry (14) configured to
▪ receive at least information indicative of said interface circuit input characteristic (Vₐ) from said interface circuit (12) when said interface circuit (12) is connected to said charging station (3'), said input circuitry (14) being configured to control an input on said charging control circuit (18) resulting in that a ratio between said interface circuit input characteristic (Vₐ) and said charging control circuit input characteristic (V'ₐ) is within a predetermined range, preferably the predetermined range is at least 80% - 120%, more preferred at least 90% - 110%, and/or
▪ receive at least information indicative of said charging control circuit input characteristic (V'ₐ) from said charging control circuit (18) when said interface circuit (12) is connected to said charging station (3'), said input circuitry (14) being configured to control an input on said interface circuit (12) resulting in that a ratio between said interface circuit input characteristic (Vₐ) and said charging control circuit input characteristic (V'ₐ) is within a predetermined range, preferably the predetermined range is at least 80% - 120%, more preferred at least 90% - 110%.

2. The communication interface of any one of the preceding claims, wherein said charging control circuit (18) comprises a set of charging control circuit portions comprising at least a first charging control circuit portion, each charging control circuit portion in said set of charging control circuit portions being adapted to assume an individual charging control circuit portion characteristic (V'_{b}) being different from said charging control circuit input characteristic (V'ₐ) when receiving said charging control circuit input (V₀).

3. The communication interface of any one of the preceding claims, wherein said interface circuit (12) comprises a set of interface circuit portions comprising at least a first interface circuit portion, each interface circuit portion in said set of interface circuit portions being adapted to assume an individual interface circuit portion characteristic (V_{b}) being different from said interface circuit input characteristic (Vₐ) when connected to said charging station (3');
said charging control circuit (18) and said interface circuit (12) being such that when said interface circuit input characteristic (Vₐ) equals said charging control circuit input characteristic (V'ₐ), a ratio between a measure of said interface circuit portion characteristic (V_{b}) of said first interface circuit portion and a measure of said charging control circuit portion characteristic (V'_{b}) of said first charging control circuit portion is within a predetermined characteristic measure range, preferably the predetermined characteristic measure range being at least 80% - 120%, more preferred at least 90% - 110%.

4. The communication interface of claims 2 or 3, wherein the charging control unit (22) is adapted to receive the individual charging control circuit portion characteristic (V'_{b}).

5. The communication interface of any one of the preceding claims, wherein the charging system (3) has a communication system according to any one or more of the following communication system standards: Combined charging System 1 (CCS1), Combined charging System 2 (CCS2), Type-1 (J1772), GB/T AC, GB/T DC, CHAdeMO, Tesla (NACS).

6. The communication interface of any one of the preceding claims, wherein a hardware configuration of said charging control circuit (18) is functionally equivalent to a hardware configuration of said interface circuit (12).

7. The communication interface of any one of the preceding claims, wherein the charging control circuit (18) comprises a control pilot (CP) specific charging control circuit (18') and the interface circuit (12) comprises a control pilot (CP) specific interface circuit (12'), wherein a hardware configuration of the control pilot specific control circuit (12') is functionally equivalent to a hardware configuration of the pilot specific interface circuit (18').

8. The communication interface of any one of the preceding claims, wherein the charging control circuit (18) comprises a proximity pilot (PP) specific charging control circuit (18") and the interface circuit (12) comprises a proximity pilot (PP) specific interface circuit (12"), wherein a hardware configuration of the proximity pilot specific control circuit (12'') is functionally equivalent to a hardware configuration of the proximity pilot specific interface circuit (18'').

9. The communication interface of any one of the preceding claims, wherein the interface circuit input characteristic (Vₐ) is an interface circuit input voltage (vₐ) resulting from a connection of the interface circuit (12) to an input voltage (v₀) provided by the charging station (3'), and
the charging control circuit input characteristic (V'ₐ) is a charging control circuit input voltage (v'ₐ) applied on said charging control circuit (18) by said input circuitry (14).

10. The communication interface of any one of the preceding claims, when dependent on any one of claims 2-4, wherein the charging control circuit portion characteristic (V'_{b}) is an individual charging control circuit portion voltage (v'_{b}) and the interface control circuit characteristic (V_{b}) is an interface control circuit voltage (v_{b}).

11. A communication system (2) for a charging system (3) for charging a propulsion electric energy storage (28) of a vehicle (4), the communication system (2) comprising:
- a connector (16) for connection to a charging station (3'),
- the communication interface (1) of any one of claims 1-10,
- a charging control unit (22), and
- an electric energy storage (26).

12. A charging system (3) for charging a propulsion electric storage (28), the charging system (3) comprising the communication system (2) of claim 11.

13. A vehicle comprising
- the charging system (3) of claim 12,
- a propulsion electric energy storage (28) connected to the charging system (3),
- a corrosion protection arrangement (30),
wherein the corrosion protection arrangement (30) is configured to be galvanically isolate the charging system (3) from a charging station (3') when the communications interface (1) is communicatively connected to the charging station (3').

14. The vehicle of claim 13, wherein the vehicle comprises a chassis and the charging control circuit (18) is electrically connected to the chassis,
and/or wherein the vehicle is a marine vessel (4).

15. An assembly comprising a vehicle according to any one of claims 13 - 14 and a charging station (3'), preferably the charging station (3') is an on-shore charging station connected to an on-shore protective earth (PE).
